# FASCICULE DE BREVET EUROPEEN

(11) **EP 3 476 266 B1**
(45) Date de publication et mention de la délivrance du brevet: **08.07.2020**
(21) Numéro de dépôt: 18202725.0
(22) Date de dépôt: 25.10.2018
(51) Int. Cl.: A47L 5/22

(54) **ASPIRATEUR ROBOT INTÉGRANT UN ASPIRATEUR À MAIN AMOVIBLE**
ROBOTERSTAUBSAUGER, DER EINEN ENTFERNBAREN HANDSTAUBSAUGER UMFASST
ROBOT VACUUM CLEANER INCORPORATING A DETACHABLE HAND VACUUM CLEANER

(30) Priorité: 26.10.2017 FR 1760113
(43) Date de publication de la demande: 01.05.2019
(73) Titulaire: SEB S.A., 69130 Ecully (FR)
(72) Inventeur: DEFLIN, Emmanuel, 69570 Dardilly (FR); FROT, Donatien, 69005 Lyon (FR); SABATTIER, Johan, 69160 Tassin la Demi Lune (FR)
(74) Mandataire: Bourrières, Patrice

(56) Documents cités:
- EP-A1- 2 656 763
- KR-A- 20080 028 219
- US-A1- 2012 189 507

## Description

### Domaine technique

La présente invention concerne le domaine des appareils de nettoyage de type aspirateur et, plus particulièrement, un aspirateur robot qui comporte une base mobile intégrant un aspirateur qu'il est possible d'extraire de cette base pour une utilisation à la main afin d'aspirer des surfaces non-accessibles par ledit robot.

### Etat de la technique

Les robots de nettoyage par aspiration, plus couramment appelés aspirateurs robots, sont devenus d'un usage commun de nos jours, ceux-ci permettant de nettoyer des surfaces complètes d'une habitation sans aucune assistance de l'utilisateur dès l'instant où ces surfaces sont planes, c'est-à-dire sur un même niveau, et qu'aucun obstacle n'empêche l'accès aux surfaces à aspirer. Ils offrent ainsi un gain de temps considérable aux utilisateurs pour pratiquer d'autres activités.

Ces robots ont cependant leurs limites puisqu'ils ne permettent pas l'aspiration de surfaces réhaussées comme, par exemple, les marches d'un escalier, les tablettes d'une étagère ou d'autres surfaces de mobiliers, les parois murales voire toutes autres surfaces inaccessibles.

L'utilisateur doit donc disposer malgré tout d'un aspirateur à main, facilement maniable et léger pour lui permettre d'accéder auxdites surfaces réhaussées et les nettoyer.

L'homme du métier a pour cela développé des aspirateurs robots intégrant un aspirateur à main qu'il est possible d'extraire pour aspirer des surfaces réhaussées.

On citera par exemple les documents CN205083385U, EP0635236B1, EP2649920A1, KR20080028219A, US5709007A et US2012189507A1. Selon ces documents, l'aspirateur robot comprend une base mobile configurée pour se déplacer dans l'environnement dans lequel il évolue. Cette base mobile reçoit un aspirateur à main capable d'aspirer les déchets tout en restant en position sur ladite base en mouvement. L'aspirateur peut être dégagé de la base pour une utilisation individuelle.

Parmi ces différents titres précités, lorsque l'aspirateur à main est positionné sur la base mobile, l'aspiration s'effectue soit directement au moyen de l'embout de l'aspirateur à main, tel que dans les documents US5709007A et US2012189507A1, soit au moyen d'une embouchure sur la base mobile qui communique avec l'embout de l'aspirateur à main, tel que dans les documents CN205083385U, EP0635236B1, EP2649920A1 et KR20080028219A. Un rouleau brosse peut également être agencé au niveau de cette embouchure de la base mobile pour soulever la poussière avant son aspiration, afin d'améliorer la qualité du nettoyage, tel que dans les documents EP0635236B1, EP2649920A1 et KR20080028219A. Les performances aérauliques ne sont pas optimales, selon ces mises en oeuvre.

Dans le brevet EP0635236B1, le corps de l'aspirateur à main est rapporté sur la base mobile qui intègre des premières batteries d'alimentation électrique. Des connecteurs électriques assurent une connexion du corps de l'aspirateur à main avec la base mobile pour son alimentation électrique par les premières batteries. Lorsque le corps de l'aspirateur à main est extrait de la base mobile, une poignée de manipulation est rapportée sur ledit corps. Cette poignée est connectée électriquement au corps et elle incorpore des secondes batteries d'alimentation électrique permettant le fonctionnement autonome de l'aspirateur à main.

Dans la demande de brevet EP2649920A1, la base mobile incorpore des premières batteries d'alimentation électrique pour son fonctionnement autonome et l'aspirateur à main comprend des secondes batteries d'alimentation électrique pour son fonctionnement autonome. Des connecteurs électriques permettent de raccorder l'aspirateur à main à la base mobile lorsque ces éléments sont assemblés afin d'assurer la recharge des secondes batteries dans l'aspirateur à main et de mettre en liaison les systèmes de contrôle respectifs de la base mobile et de l'aspirateur à main pour la commande desdits éléments.

### Résumé de l'invention

La présente invention porte sur un aspirateur robot intégrant un aspirateur à main amovible, son principal objectif étant de concevoir un aspirateur robot dont les performances aérauliques sont optimisées, dans le but d'améliorer la qualité de l'aspiration des poussières et déchets.

Un autre objectif est de concevoir une alimentation électrique de la base mobile et de l'aspirateur à main qui soit simplifiée en regard des conceptions existant parmi l'art antérieur, notamment dans le but de réduire son coût de fabrication et de faciliter la maintenance des batteries sur l'aspirateur robot.

A cet effet, l'invention concerne un aspirateur robot qui comprend une base mobile. Cette base mobile comprend un système de navigation configuré pour permettre le déplacement de ladite base mobile sur une surface à aspirer sur laquelle peut être disposé du mobilier, par exemple une table, une chaise, un buffet ou un fauteuil. De tels systèmes de navigation sont bien connus sur les aspirateurs robots traditionnels auxquels l'homme du métier pourra se référer. Ce système de navigation ne faisant pas l'objet essentiel de la présente invention, il ne sera pas détaillé dans la présente demande de brevet.

Selon l'invention, l'aspirateur robot comprend également un aspirateur à main. En outre, des premiers moyens de réception sont agencés entre la base mobile et l'aspirateur à main pour permettre leur engagement l'un dans l'autre afin d'aspirer une surface au moyen de l'aspirateur à main durant les déplacements de la base mobile sur cette surface. Ledit aspirateur à main peut également être extrait de ladite base mobile pour son utilisation individuelle, dans le but d'aspirer d'autres surfaces inaccessibles lorsque ledit aspirateur à main est engagé sur la base mobile.

De manière remarquable, selon l'invention, l'aspirateur à main comprend un corps et un tube d'aspiration muni à son extrémité d'un premier embout, les premiers moyens de réception comprenant un logement en forme d'entonnoir qui communique avec une bouche d'aspiration sous la base mobile par le biais d'un second embout. En outre, les premier et second embouts sont configurés pour s'emboîter l'un dans l'autre lors de l'engagement du corps et du tube d'aspiration dans le logement. Par ailleurs, les formes du corps et du tube d'aspiration sont complémentaires à celles du logement.

Cette conception facilite le guidage de l'aspirateur à main durant son engagement sur la base mobile. L'aspirateur à main se positionne ainsi aisément sur la base mobile. En outre, l'emboîtement entre le premier embout et le second embout garantit une prise directe entre le tube d'aspiration et la bouche d'aspiration, ce qui améliore ainsi la qualité de l'aspiration. Cela contribue également à réduire l'encrassement de la zone de jonction entre le tube d'aspiration et la bouche d'aspiration. Tandis que les conceptions précitées selon l'art antérieur ne font que positionner en vis-à-vis l'extrémité du tube d'aspiration avec une ouverture de la bouche d'aspiration, sans les raccorder physiquement ; cette absence de raccordement laisse apparaître un espacement qui réduit la qualité de l'aspiration et permet l'engouffrement des poussières.

Selon une réalisation de l'aspirateur robot, le premier embout est un embout mâle et le second embout est un embout femelle. On pourrait envisager une variante de réalisation prévoyant l'inverse, c'est-à-dire un embout femelle pour le premier embout et un embout mâle pour le second embout.

Selon l'aspirateur robot objet de l'invention, des moyens d'étanchéité sont agencés entre le premier embout et le second embout. La présence de ces moyens d'étanchéité permet d'augmenter encore les performances d'aspiration.

Selon une réalisation de l'aspirateur robot, la bouche d'aspiration comprend une forme allongée s'étendant transversalement sur la base mobile, c'est-à-dire dans le sens de la largeur de la base mobile. Cette forme allongée permet d'élargir l'aspiration sur quasiment toute la largeur du robot, ce qui permet d'augmenter la vitesse de traitement de la surface à aspirer.

De préférence, selon cette réalisation, l'aspirateur robot comprend une brosse agencée dans la bouche d'aspiration et des moyens d'entraînement en rotation de la brosse, lesdits moyens d'entraînement étant logés dans la base mobile. La présence de cette brosse permet de soulever les poussières de la surface au niveau de la bouche d'aspiration, ce qui facilite ensuite leur aspiration. Cela contribue également à optimiser les performances de dépoussiérage et la vitesse de traitement de la surface à aspirer.

Selon une réalisation de l'aspirateur robot, l'aspirateur à main comprend une poignée de manipulation et le corps comprend une forme allongée transversale à la poignée de manipulation. En outre, la poignée de manipulation et le tube d'aspiration sont disposés en opposition chacun d'un côté du corps, en partie centrale dudit corps. Cette configuration facilite l'introduction du tube d'aspiration et du corps dans le logement. Cela permet également de réduire l'encombrement de l'aspirateur robot une fois l'aspirateur à main engagé dans la base mobile.

De préférence, selon cette réalisation, le corps comprend une grille d'évacuation d'air orientée vers le haut du côté du tube d'aspiration, de sorte à éviter l'évacuation de l'air en direction de l'utilisateur lors de l'utilisation individuelle de l'aspirateur à main.

De préférence, selon cette réalisation, le logement comprend un canal de guidage de l'air dans lequel est disposée la grille d'évacuation d'air lors de l'engagement du corps dans ce logement, de sorte à éviter l'évacuation de l'air en direction de la surface à aspirer lors de l'utilisation de l'aspirateur robot en mode de navigation de la base mobile.

Selon l'invention, l'aspirateur robot comprend des moyens de verrouillage de l'aspirateur à main en position engagée sur la base mobile. Cela permet de garantir le maintien de l'emboîtement entre le premier embout et le second embout, notamment lorsque l'aspirateur robot rencontre des obstacles durant la navigation sur la surface à aspirer. On évite ainsi une perte d'aspiration durant l'utilisation. Selon une réalisation, ces moyens de verrouillage sont du type pêne et gâche. De préférence, le pêne est mis en œuvre sur l'aspirateur à main et la gâche est mise en œuvre sur la base mobile. On pourrait envisager d'autres conceptions de moyens de verrouillage, dans le cadre de l'invention. A titre d'exemple non limitatif, on pourrait envisager une poignée de manipulation de l'aspirateur à main montée pivotante sur ledit aspirateur à main, le pivotement de cette poignée de manipulation dans une première position permettant d'engager l'aspirateur à main sur la base mobile ou, inversement, de le dégager de celle-ci, et le pivotement de ladite poignée de manipulation dans une seconde position, après engagement de l'aspirateur à main sur la base mobile, permettant de verrouiller lesdits éléments accouplés entre eux au moyen d'un mécanisme de verrouillage configuré pour être activé lors dudit pivotement en seconde position.

Selon l'aspirateur robot objet de l'invention, les premiers moyens de réception sont configurés sur la base mobile pour permettre l'engagement de l'aspirateur à main par un mouvement de translation plus ou moins à l'horizontal.

Selon l'aspirateur robot objet de l'invention, la base mobile est inscrite dans un cylindre aplati, c'est-à-dire plus ou moins dans une forme de palet. En outre, l'aspirateur à main et les premiers moyens de réception sont configurés pour que ledit aspirateur à main soit également inscrit dans ce cylindre aplati en position engagée dans la base mobile. Cette configuration permet de faciliter la navigation de la base mobile sur la surface à aspirer tout en réduisant considérablement les risques de contact de l'aspirateur à main avec le mobilier présent sur ladite surface.

Selon une réalisation, l'aspirateur robot comprend des premiers moyens de connexion électrique agencés entre l'aspirateur à main et la base mobile et mis en place lors de l'engagement de l'aspirateur à main sur la base mobile. Cela permet notamment à la base mobile de communiquer avec l'aspirateur à main lorsqu'ils sont engagés l'un dans l'autre.

De préférence, selon cette réalisation de l'aspirateur robot, l'aspirateur à main comprend un jeu de batteries rechargeables configuré pour permettre son alimentation électrique et celle de la base mobile lors dudit engagement. Ainsi, le jeu de batteries permet l'alimentation électrique de l'aspirateur à main uniquement lorsque ledit aspirateur à main est déconnecté de la base mobile et utilisé individuellement. En d'autres termes, le jeu de batteries de l'aspirateur à main sert, entre autres, à alimenter la fonction d'aspiration contenue dans l'aspirateur à main, lequel est systématiquement sollicité. Au contraire, lorsque l'aspirateur à main est engagé sur la base mobile et, de ce fait, connecté à celle-ci grâce aux premiers moyens de connexion électrique, le jeu de batteries assure l'alimentation électrique non seulement de l'aspirateur à main, mais aussi de la base mobile. Cette conception de l'aspirateur à main selon l'invention supprime la présence d'un jeu de batteries dans la base mobile, contrairement aux conceptions d'aspirateur robot telles que celles décrites dans les documents antérieurs précités. L'aspirateur robot présente, ainsi, une conception simplifiée avec un unique jeu de batteries rechargeables, ce qui permet d'alléger la base mobile et de réduire son encombrement. Cela facilite également les éventuelles opérations de maintenance, l'utilisateur n'ayant qu'un seul jeu de batteries à remplacer en cas de disfonctionnement de celui-ci. Cela réduit aussi le coût global de conception de l'aspirateur robot. Bien entendu, cela n'exclut pas la possibilité de mettre en œuvre une variante de réalisation de l'aspirateur robot avec un premier jeu de batteries dans l'aspirateur à main et un second jeu de batteries dans la base mobile, tout en restant dans le cadre de l'invention.

Selon cette réalisation préférentielle, l'aspirateur robot comprend une station d'accueil configurée pour être alimentée par une source électrique externe. Des seconds moyens de réception sont agencés entre la base mobile et la station d'accueil pour permettre le positionnement de la base mobile sur la station d'accueil. Des seconds moyens de connexion électrique sont agencés entre la station d'accueil et la base mobile et mis en place lors dudit positionnement. En outre, des moyens de raccordement électrique sont agencés entre les premiers moyens de connexion électrique et les seconds moyens de connexion électrique pour permettre la recharge du jeu de batteries lorsque l'aspirateur à main est engagé sur la base mobile et que la base mobile est positionnée sur la station d'accueil.

Selon cette réalisation préférentielle, l'aspirateur robot comprend une première carte électronique configurée pour gérer l'alimentation électrique de l'aspirateur à main et celle de la base mobile au moyen du jeu de batteries et la recharge électrique dudit jeu de batteries. La première carte électronique est logée dans l'aspirateur à main, ce qui est préférable puisque cela permet à cette première carte électronique de gérer également la décharge du jeu de batteries de l'aspirateur à main lorsque celui-ci est déconnecté de la base mobile et utilisé individuellement.

Selon cette réalisation préférentielle, l'aspirateur à main comprend un bouton marche/arrêt configuré pour commander son alimentation électrique et celle de la base mobile depuis le jeu de batteries. On pourrait cependant prévoir deux moyens de commande séparés, par exemple de type bouton ou clavier, le premier sur l'aspirateur à main et le second sur la base mobile afin de commander la fonction marche/arrêt de l'aspirateur à main utilisé individuellement avec le premier moyen de commande et de commander la fonction marche/arrêt de l'aspirateur à main et de la base mobile, accouplés entre eux, avec le second moyen de commande.

Selon cette réalisation préférentielle, la base mobile comprend une deuxième carte électronique configurée pour gérer la navigation de ladite base mobile, ladite deuxième carte électronique étant fonctionnelle lorsque le bouton marche/arrêt est en position marche et que l'aspirateur à main est engagé sur la base mobile. Selon une variante, la base mobile peut comprendre un clavier configuré pour gérer des programmes de navigation de la base mobile enregistrés sur la deuxième carte électronique, ledit clavier étant fonctionnel lorsque le bouton marche/arrêt est en position marche et que l'aspirateur à main est engagé sur la base mobile. Tel que précisé précédemment, ce clavier peut également commander la fonction marche/arrêt de l'aspirateur à main et de la base mobile, accouplés en eux, indépendamment du bouton marche/arrêt sur l'aspirateur à main.

Selon cette réalisation préférentielle, l'aspirateur à main comprend une troisième carte électronique configurée pour gérer les différents modes d'aspiration, ladite troisième carte électronique étant fonctionnelle dès que le bouton marche/arrêt est en position marche, indépendamment de l'engagement dudit aspirateur à main sur la base mobile.

Selon cette réalisation préférentielle, la deuxième carte électronique est connectée à la troisième carte électronique par le biais des premiers moyens de connexion électrique lors de l'engagement de l'aspirateur à main sur la base mobile.

De préférence, selon une réalisation de l'aspirateur robot, les premiers moyens de connexion comprennent cinq premières pastilles métalliques sur la base mobile et cinq secondes pastilles métalliques sur l'aspirateur à main, les premières pastilles métalliques entrant respectivement en contact avec les secondes pastilles métalliques lors de l'engagement de l'aspirateur à main sur la base mobile. On pourrait envisager d'autres moyens de connexion, par exemple des broches s'engageant dans des connecteurs.

### Brève description des figures

Les caractéristiques et avantages de l'invention apparaîtront à la lecture de la description suivante s'appuyant sur des figures, parmi lesquelles :
- les figures 1 et 2 sont deux vues tridimensionnelles, respectivement de dessus et de dessous, illustrant deux des éléments constitutifs de l'aspirateur robot objet de l'invention, à savoir la base mobile et l'aspirateur à main, lesquels sont engagés l'un dans l'autre ;
- la figure 3 est une vue tridimensionnelle, de derrière, illustrant la base mobile des figures 1 et 2 ;
- les figures 4 et 5 sont deux vues tridimensionnelles, respectivement de derrière et de devant, illustrant l'aspirateur à main des figures 1 et 2 ;
- la figure 6 illustre une vue tridimensionnelle d'une pièce de la base mobile mettant en œuvre la bouche d'aspiration et le premier embout ;
- la figure 7 schématise l'aspirateur robot, la base mobile étant en position sur la station d'accueil, l'aspirateur à main étant engagé sur la base mobile ;
- les figures 8 et 9 sont deux vues partielles tridimensionnelles mettant en évidence certains des composants internes de la base mobile et de l'aspirateur à main, engagés l'un dans l'autre.

### Description détaillée

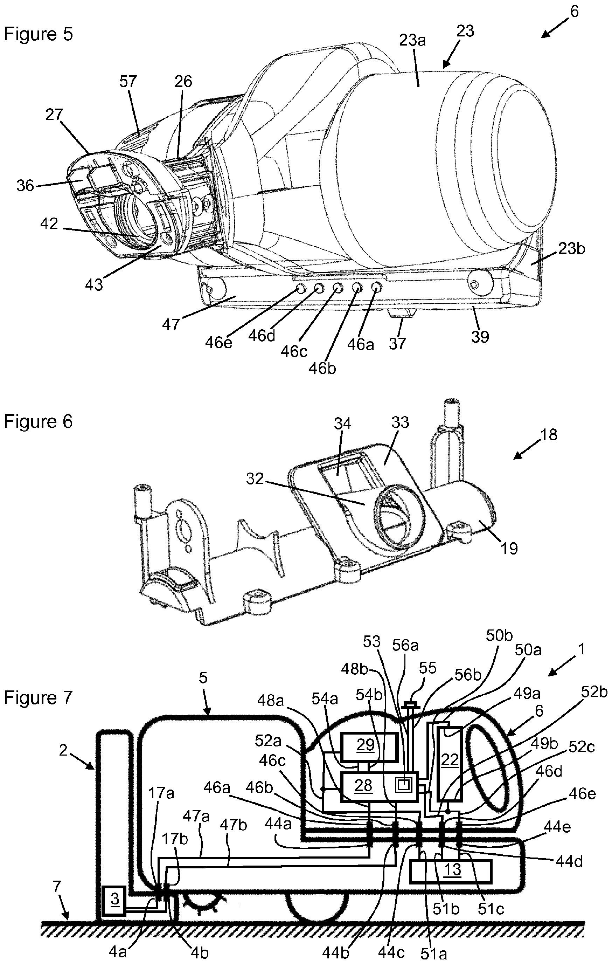

Tel que schématisé sur la figure 7, l'aspirateur robot 1 comprend une station d'accueil 2 qui est conçue pour être raccordée à une prise de courant alimentée par le réseau électrique du bâtiment (non illustré). La station d'accueil 2 intègre notamment un transformateur 3 permettant de réduire la tension aux bornes de deux connecteurs électriques 4a, 4b, par exemple une tension de 21,9 Volts, voire d'autres basses tensions. L'aspirateur robot 1 comprend également une base mobile 5 et un aspirateur à main 6 ; lorsque l'aspirateur à main 6 est engagé sur la base mobile 5, ladite base mobile 5 peut être rapportée sur la station d'accueil 2. La station d'accueil 2 est positionnée sur une surface 7 qui est plane, la base mobile 5 et l'aspirateur à main 6 engagés l'un dans l'autre pouvant se déplacer sur cette surface 7 pour y aspirer les poussières présentent sur la surface 7 directement au moyen dudit aspirateur à main 6.

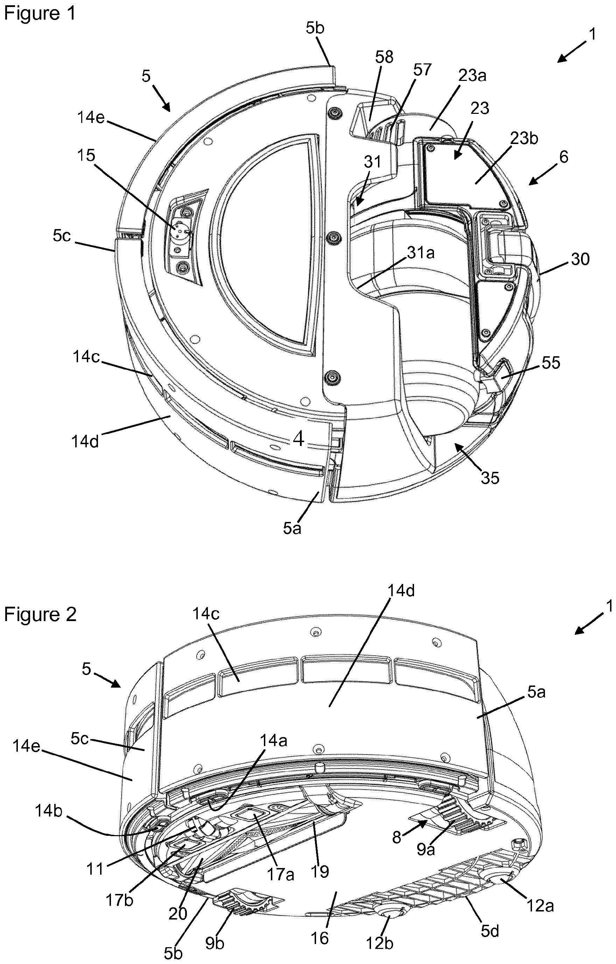

La base mobile 5 comprend un système de navigation 8 illustré en partie sur les figures 2, 8 et 9. Ce système de navigation 8 comporte deux roues motrices 9a, 9b entraînées en rotation par deux moteurs 10a, 10b respectifs et disposées sur des côtés latéraux 5a, 5b de la base mobile 5, une roue libre 11 agencée en partie centrale d'un côté avant 5c de la base mobile 5 et deux billes 12a, 12b agencées d'un côté arrière 5d de la base mobile 5 avec une répartition uniforme. Selon la commande des deux moteurs 10a, 10b, la base mobile 5 peut pivoter à gauche, à droite ou sur elle-même, avancer ou reculer, tout en restant en appui stable sur la surface 7. La navigation est gérée par une carte électronique 13 qui reçoit des données de deux capteurs de chute 14a, 14b permettant de détecter un vide en contrebas, notamment lorsque la surface 7 donne sur un escalier. Cette carte électronique 13 reçoit aussi des données de capteurs de proximité (non représentés), par exemple des capteurs infrarouges, agencés derrière des fenêtres 14c sur toute la demi-circonférence avant de la base mobile 5, comme l'illustrent les figures 1 et 2, ces capteurs de proximité permettant de détecter des obstacles présents sur la surface 7, notamment du mobilier ou une paroi murale (non illustrés). Cette carte électronique 13 reçoit également des donnés de capteurs physiques 14d, 14e, de type capteur de contact, mis en œuvre par les deux parties gauche et droite de la demi-circonférence avant de la base mobile 5, ces capteurs physiques 14d, 14e s'activant par contact lorsque les capteurs de proximité infrarouges n'ont pas détecté l'obstacle. En outre, la carte électronique 13 reçoit des données d'un émetteur/récepteur 15 qui communique avec la station d'accueil 2. La carte électronique 13 agit en conséquence sur les deux moteurs 10a, 10b pour déplacer de manière aléatoire, voire de manière méthodique, la base mobile 5 sur toute la surface 7 à aspirer et pour la ramener sur la station d'accueil 2 en fin de travail, afin de permettre la recharge de l'aspirateur robot 1. On entend par déplacement méthodique le fait, notamment, de déplacer la base mobile 5 en suivant les murs via les capteurs de proximité et le fait de faire rebondir la base mobile 5 sur les obstacles selon des séquences d'angles prédéfinies, en donnant des impulsions variables aux moteurs 10a, 10b. La base mobile 5 dispose d'une forme cylindrique aplatie, à la manière d'un palet, comme l'illustrent notamment les figures 1 et 2, ce qui favorise ses déplacements aléatoires sans risque de blocage vis-à-vis des obstacles. Bien évidemment, le système de navigation 8 pourrait être mis en œuvre au moyen de toutes autres variantes connues de l'homme du métier sans sortir du cadre de l'invention. Il en est de même pour la forme de la base mobile 5, la forme cylindrique aplatie étant toutefois privilégiée.

La base mobile 5 comporte une face inférieure 16 qui est positionnée parallèlement à proximité de la surface 7 à aspirer, du fait de la présence des roues 9a, 9b, 10 et des billes 12a, 12b. Sur la figure 2, on distingue la présence de deux connecteurs électriques 17a, 17b sur cette face inférieure 16; ces connecteurs électriques 17a, 17b viennent en contact avec les deux connecteurs électriques 4a, 4b de la station d'accueil 2 lorsque la base mobile 5 est ramenée sur cette station d'accueil 2.

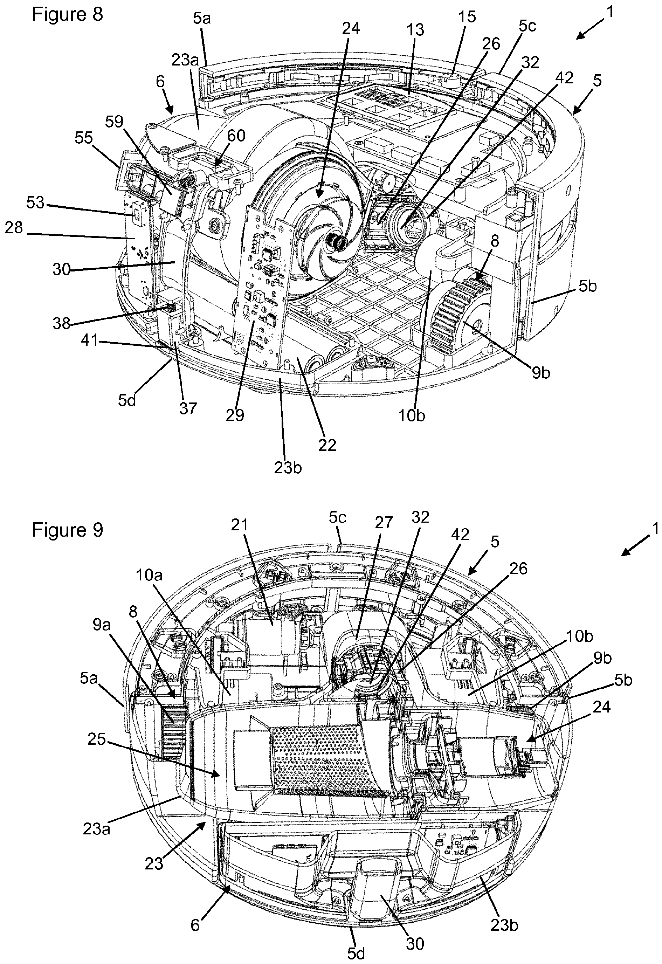

La base mobile 5 comporte une pièce d'aspiration 18, illustrée en figure 6, qui comprend une bouche d'aspiration 19 débouchant sur la face inférieure 16, cette bouche d'aspiration 19 étant de forme allongée et s'étendant transversalement sur toute la largeur de la face inférieure 16, comme l'illustre la figure 2. Une brosse 20 est logée dans cette bouche d'aspiration 19, cette brosse 20 étant entraînée en rotation par un moteur 21 illustré en figure 9. Ce moteur 21 est commandé par la carte électronique 13.

Les composants électriques de la base mobile 5, notamment la carte électronique 13 et les moteurs 10a, 10b, 21 sont alimentés électriquement par l'intermédiaire de l'aspirateur à main 6. En d'autres termes, la base mobile 5 ne comporte aucun jeu de batteries pour son alimentation électrique, seul l'aspirateur à main 6 étant équipé d'un jeu de batteries 22, illustré en figure 8, qui sert à l'alimentation électrique non seulement de l'aspirateur à main 6, mais aussi de la base mobile 5.

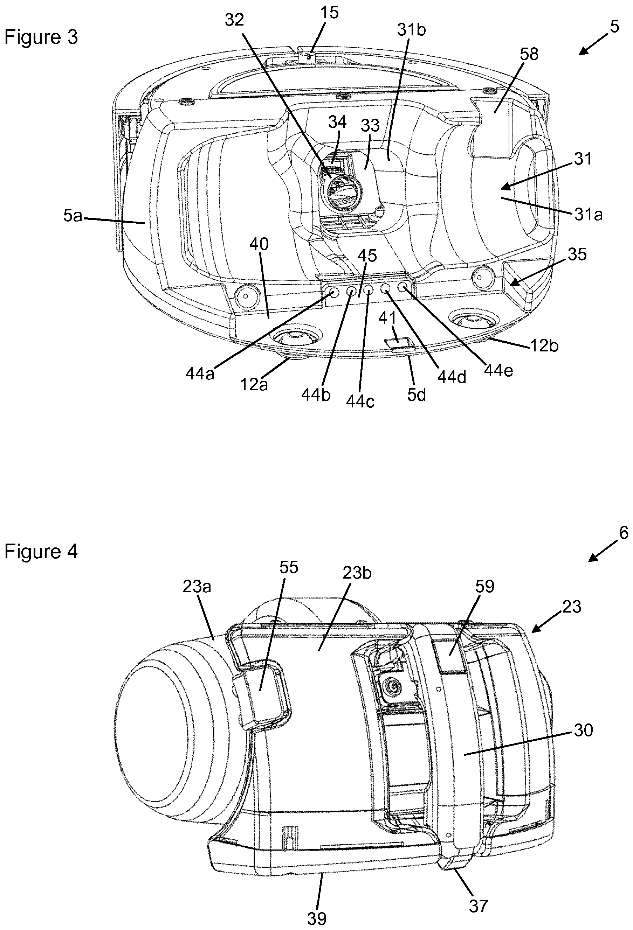

Comme l'illustre les figures 4, 5, 8 et 9, l'aspirateur à main 6 comprend un corps 23 présentant une forme allongée disposée dans le sens transversal. Ce corps 23 comprend une partie avant 23a ayant plus ou moins une forme cylindrique qui intègre une turbine d'aspiration 24 et une chambre cyclonique 25 configurée pour filtrer et retenir les déchets aspirés. Cette partie avant 23a est prolongée vers l'avant par un tube d'aspiration 26 qui est muni à son extrémité d'un premier embout 27. Le corps 23 comprend aussi une partie arrière 23b qui intègre une première carte électronique 28, une deuxième carte électronique 29 et le jeu de batteries 22 précité, comme l'illustre la figure 8. Une poignée de manipulation 30 est fixée à l'arrière de cette partie arrière 23b du corps 23, le tube d'aspiration 26 s'étendant en opposition de la poignée de manipulation 30, à l'avant de la partie avant 23a, comme le montrent les figures 4 et 5.

Comme l'illustrent les figures 1 et 3, la base mobile 5 comprend un logement 31 qui présente plus ou moins une forme en entonnoir, avec une partie élargie 31a et une partie rétrécie 31b. La partie élargie 31a présente une forme de cuve semi-cylindrique permettant la réception en grande proportion de la partie avant 23a du corps 23 de l'aspirateur à main 6, comme l'illustre la figure 1. La partie rétrécie 31b permet la réception du tube d'aspiration 26 et du premier embout 27. La pièce d'aspiration 18, illustrée en figure 6, comprend un second embout 32 qui prolonge vers le haut et l'arrière la bouche d'aspiration 19, avec laquelle ledit second embout 32 communique. La pièce d'aspiration 18 comprend également une plaque 33 munie d'une fenêtre 34 disposée au-dessus du second embout 32, ledit second embout 32 passant au travers de ladite plaque 33, comme l'illustre la figure 6. Cette plaque 33 ferme et constitue le fond de la partie rétrécie 31b du logement 31, le second embout 32 étant orienté vers l'arrière de la base mobile 5 dans cette partie rétrécie 31b, comme l'illustre la figure 3. Une zone de réception 35 prolonge le logement 31, vers l'arrière de la base mobile 5, comme l'illustre la figure 3. Cette zone de réception 35 reçoit la partie arrière 23b du corps 23 de l'aspirateur à main 6 lorsque la partie avant 23a dudit corps 23 et le tube d'aspiration 26 sont engagés dans le logement 31, comme l'illustre la figure 1. Lorsque l'aspirateur à main 6 est engagé sur la base mobile 5, comme illustré en figure 1, le premier embout 27 à l'extrémité du tube d'aspiration 26 vient s'emboîter sur le second embout 32 dans le fond de la partie rétrécie 31b et la fenêtre 34 reçoit des broches 36 s'étendant à l'avant du premier embout 27, comme l'illustre la figure 5. Ces broches 36 servent à la fixation d'accessoires complémentaires (non illustrés) qui peuvent être rapportés sur ledit premier embout 27 lors d'une utilisation individuelle de l'aspirateur à main 6, par exemple une brosse ou un tube de rallonge.

Tel qu'illustré en regard des figures 3, 4, 5 et 8, la poignée de manipulation 30 comprend à son extrémité inférieure un pêne 37 monté en liaison glissière à l'intérieur de ladite poignée de manipulation 30 de manière à pouvoir être escamoté à l'intérieur de celle-ci. Le pêne 37 est monté en rappel par ressort 38 de sorte à le ramener naturellement en position sortie illustrée en figures 4 et 5, selon laquelle ledit pêne 37 est saillant par rapport à la face inférieure 39 de la partie arrière 23b du corps 23. La zone de réception 35 comprend une embase 40 qui reçoit ladite face inférieure 39 lorsque l'aspirateur à main 6 est en position engagée dans la base mobile 5. Cette embase 40 comprend une crevure formant une gâche 41 qui reçoit le pêne 37 dans ladite position engagée.

L'engagement de l'aspirateur à main 6 sur la base mobile 5 s'effectue simplement par un mouvement de translation de l'arrière vers l'avant, en insérant le tube d'aspiration 26 dans la partie rétrécie 31b du logement 31, puis la partie avant 23a du corps 23 dans la partie élargie 31a du logement. La forme du logement 31 facilite le positionnement convenable et l'introduction de l'aspirateur à main 6 dans la base mobile 5. Lorsque le premier embout 27 à l'extrémité du tube d'aspiration 26 est emboîté sur le second embout 32 et que les broches 36 sont dans la fenêtre 34, tel que précité, ledit premier embout 27 étant alors en butée contre la plaque 33, le pêne 37 s'encliquète dans la gâche 41. Ainsi, l'aspirateur à main 6 est verrouillé en position engagée dans la base mobile 5, ce qui assure son maintien convenable. L'extraction de l'aspirateur à main 6, pour son utilisation individuelle, s'effectue simplement en le tirant vers l'arrière, la force exercée permettant d'escamoter le pêne 37 pour le dégager de la gâche 41 et autoriser ladite extraction.

Le premier embout 27 sur l'aspirateur à main 6 est de préférence un embout mâle et le second embout 32 sur la base mobile 5 est de préférence un embout femelle. On pourrait envisager une variante prévoyant l'inverse. L'emboîtement du premier embout 27 sur le second embout 32 dans la position engagée précitée permet à la bouche d'aspiration 19, débouchant sur la face inférieure 16 de la base mobile 5, d'être directement connectée au tube d'aspiration 26 de l'aspirateur à main 6, ce qui permet d'obtenir une excellente qualité d'aspiration, sans aucune perte. Pour optimiser encore cette aspiration, un joint d'étanchéité 42 est agencé à l'intérieur du premier embout 27 sur le tube d'aspiration 26, comme l'illustrent les figures 5 et 8, ce joint d'étanchéité 42 se positionnant autour du second embout 32 dans ladite position engagée. On pourrait envisager de mettre en œuvre une étanchéité différemment entre les deux embouts 27, 32, par exemple en disposant un joint d'étanchéité (non illustré) autour du second embout 32, contre la plaque 33, la face avant 43 du premier embout 27 venant en appui contre ce joint d'étanchéité et la plaque 33 dans ladite position engagée, le verrouillage de l'aspirateur à main 6 sur la base mobile 5, tel que précité, assurant le maintien de l'étanchéité.

La base mobile 5 comprend cinq premiers connecteurs électriques 44a, 44b, 44c, 44d, 44e positionnés dans un fond 45 de la zone de réception 35, sous le logement 31 qui est attenant audit fond 45, comme l'illustre la figure 3. Ces cinq premiers connecteurs électriques 44a, 44b, 44c, 44d, 44e sont constitués, de préférence, au moyen de pastilles métalliques. De même, l'aspirateur à main 6 comprend cinq seconds connecteurs électriques 46a, 46b, 46c, 46d, 46e positionnés sur une face avant 47 de la partie arrière 23b du corps 23, sous la partie avant 23a dudit corps 23 qui est attenante à ladite face avant 47, comme l'illustre la figure 5. Ces cinq seconds connecteurs électriques 46a, 46b, 46c, 46d, 46e sont également constitués, de préférence, au moyen de pastilles métalliques. Dans la position engagée précitée, les cinq seconds connecteurs électriques 46a, 46b, 46c, 46d, 46e viennent respectivement en contact avec les cinq premiers connecteurs électriques 44a, 44b, 44c, 44d, 44e.

Tel que cela est schématisé sur la figure 7, deux 44a, 44b des cinq premiers connecteurs électriques 44a, 44b, 44c, 44d, 44e sont reliés aux deux connecteurs électriques 17a, 17b sous la base mobile 5 au moyen de deux fils conducteurs 47a, 47b, ce qui permet leur connexion aux connecteurs 4a, 4b sur la station d'accueil 2 lorsque la base mobile 5 est positionnée sur cette station d'accueil 2, comme expliqué précédemment. Ces deux premiers connecteurs électriques 44a, 44b viennent en contact avec deux 46a, 46b des cinq seconds connecteurs électriques 46a, 46b, 46c, 46d, 46e dans ladite position engagée. Ces deux seconds connecteurs électriques 46a, 46b sont reliées à la première carte électronique 28 au moyen de deux fils conducteurs 48a, 48b. Cette première carte électronique 28 est elle-même en liaison avec les bornes positive 49a et négative 49b du jeu de batteries 22 au moyen de deux fils conducteur 50a, 50b. La première carte électronique 28 est configurée pour assurer cette recharge du jeu de batteries 22 lorsque l'aspirateur à main 6 est engagé sur la base mobile 5 et que ladite base mobile 5 est engagée sur la station d'accueil 2.

Tel que cela est schématisé sur la figure 7, les trois autres 44c, 44d, 44e des cinq premiers connecteurs électriques 44a, 44b, 44c, 44d, 44e sont reliés à la carte électronique 13 dans la base mobile 5 au moyen de trois fils conducteurs 51a, 51b, 51c. De même, les trois autres 46c, 46d, 46e des cinq seconds connecteurs électriques 46a, 46b, 46c, 46d, 46e sont reliés à la première carte électronique 28 au moyen de trois fils conducteurs 52a, 52b, 52c. Le premier fils conducteur 52a est également en liaison avec la deuxième carte électronique 29 dans l'aspirateur à main 6. Le second fil conducteur 52b est en liaison avec un transformateur de tension 53 sur la première carte électronique 28 qui permet une réduction de la tension aux bornes des deux connecteurs électriques 46a, 46b alimentées depuis la station d'accueil 2, afin de délivrer une tension réduite aux bornes des connecteurs électriques 46d, 46e qui servent à alimenter électriquement la carte électronique 13 et les moteurs 10a, 10b, 21 dans la base mobile 5, lorsqu'ils sont en contact avec les deux connecteurs électriques 44d, 44e sur ladite base mobile 5. Ce transformateur de tension 53 permet, par exemple, de convertir une tension de 21,9 Volts en une tension de 14,4 Volts. Le troisième fil conducteur 52c est également en liaison avec la borne négative 49b du jeu de batteries 22. La première carte électronique 28 est en outre en liaison avec la deuxième carte électronique 29 au moyen de deux fils conducteurs 54a, 54b. Tel qu'illustré sur les figures 1, 4 et 7, l'aspirateur à main comprend un bouton marche/arrêt 55 de type interrupteur, qui est relié à la première carte électronique 28 au moyen de deux fils conducteurs 56a, 56b. La deuxième carte électronique 29 est configurée pour gérer le fonctionnement de l'aspirateur à main 6 lors de son utilisation en mode individuel, c'est-à-dire lorsque l'aspirateur à main 6 est détaché de la base mobile 5 pour aspirer d'autres surfaces que la surface 7, par exemple un plan de table, une étagère ou les marches d'un escalier (non illustrés), et lors de son utilisation en mode robot, c'est-à-dire lorsque l'aspirateur à main 6 et la base mobile 5 sont engagés l'un dans l'autre. Cette deuxième carte électronique 29 agit sur la turbine d'aspiration 24.

Lorsque l'utilisateur appuie sur le bouton marche/arrêt 55 pour mettre en marche l'aspirateur à main 6 et que ledit aspirateur à main 6 est en position engagée sur la base mobile 5, l'aspirateur robot 1 se met à fonctionner en mode robot. La carte électronique 13 de la base mobile 5 entre en relation avec la première carte électronique 28 et la deuxième carte électronique 29 de l'aspirateur à main 5. La première carte électronique 28 alimente, par le biais du jeu de batteries 22, la carte électronique 13 et les moteurs 10a, 10b, 21 de la base mobile 5, ainsi que la deuxième carte électronique 29 et la turbine d'aspiration 24. La carte électronique 13 agit sur les moteurs 10a, 10b et 21. La deuxième carte électronique 29, en relation avec ladite carte électronique 13, agit en outre sur la turbine d'aspiration 24 pour la faire fonctionner en mode robot, afin d'assurer un débit d'aspiration adapté audit mode robot.

Si l'utilisateur détache l'aspirateur à main 6 de la base mobile 5 pour son utilisation en mode individuel, alors que le bouton marche/arrêt est en position marche, la base mobile 5 arrête de fonctionner instantanément du fait qu'elle n'est plus alimentée. La première carte électronique 28 et la deuxième carte électronique 29 détecte cette déconnexion et se mettent à fonctionner en mode individuel, la deuxième carte électronique 29 adaptant le débit d'aspiration de la turbine d'aspiration 24 audit mode individuel.

Si l'utilisateur repositionne l'aspirateur à main 6 sur la base mobile 5, alors que le bouton marche/arrêt 55 est toujours sur la position marche, ladite base mobile 5 est de nouveau alimentée et l'aspirateur robot 1 se met à nouveau à fonctionner en mode robot.

Lorsque l'aspirateur à main 6 est en position engagée sur la base mobile 5 et que la base mobile 5 est en position sur la station d'accueil 2, la première carte électronique 28 gère la recharge du jeu de batteries 22, quelle que soit la position du bouton marche/arrêt.

Lorsque le bouton marche/arrêt est en position arrêt, ni l'aspirateur à main 6 ni la base mobile 5 ne fonctionne (excepté la recharge du jeu de batteries 22 en position engagée) et l'extraction ou l'engagement de l'aspirateur à main 6 n'a aucune incidence sur le fonctionnement de la base mobile 5 tant que le bouton marche/arrêt reste dans cette position arrêt.

La présentation ci-dessus, quant aux différentes cartes électroniques 13, 28, 29 et quant aux raccordements par le biais des fils conducteurs avec lesdites cartes électroniques 13, 28, 29 et le jeu de batteries 22, n'est qu'un exemple non limitatif. L'homme du métier de l'électronique sera en mesure de concevoir les circuits électroniques adaptés sur la base mobile 5 et sur l'aspirateur à main 6 pour parvenir à mettre en œuvre le principe de fonctionnement de l'aspirateur robot 1 en mode individuel et en mode robot, tel que décrit précédemment.

Sur les figures 1 et 5, la partie avant 23a du corps 23 de l'aspirateur à main 6 comprend une grille d'aération 57 qui est positionnée vers le haut, du côté avant de l'aspirateur à main 6. Cette grille d'aération 57 permet d'évacuer l'air en sortie de la turbine d'aspiration 24 en évitant de diriger cet air dans le visage de l'utilisateur lorsqu'il utilise l'aspirateur à main 6 en mode individuel. En outre, sur les figures 1 et 3, la base mobile 5 comprend un canal de guidage 58 agencé au-dessus du logement 31. La figure 1 montre que la grille d'aération 57 est position dans le canal de guidage 58 lorsque l'aspirateur à main 6 est engagé dans la base mobile 5. Ainsi, le canal de guidage 58 dirige l'air extrait vers le haut, ce qui évite de soulever la poussière présente sur la surface 7 durant l'aspiration en mode robot.

On constate sur la figure 1 que, lorsque l'aspirateur à main 6 est engagé dans la base mobile 5, ledit aspirateur à main 6 reste contenu dans la forme cylindrique aplatie de ladite base mobile 5. Cela permet d'éviter l'accrochage de l'aspirateur à main 6 durant le fonctionnement en mode robot.

Le verrouillage mis en œuvre au moyen du pêne 37 et de la gâche 41 assure, outre le maintien emboîté du premier embout 27 sur le second embout 32, le maintien des contacts entre les cinq premiers connecteurs électriques 44a, 44b, 44c, 44d, 44e et les cinq seconds connecteurs électriques 46a, 46b, 46c, 46d, 46e. On pourrait envisager des variantes de moyens de verrouillage de l'aspirateur à main 6 en position engagée sur la base mobile 5.

Tel que l'illustre notamment la figure 8, la poignée de manipulation 30 comprend en partie supérieure un bouton 59 qui actionne un mécanisme de verrouillage 60 agencé entre la partie avant 23a et la partie arrière 23b du corps 23, de sorte à permettre l'extraction de la partie avant 23a lorsque l'aspirateur à main 6 est détaché de la base mobile 5, afin de vider la poussière contenue dans la chambre cyclonique 25.

La base mobile 5 peut également comporter un clavier (non illustré) en liaison avec la carte électronique 13 est permettant de régler différents modes de fonctionnement de l'aspirateur robot 1 en mode robot, par exemple pour régler différentes vitesses de navigation et/ou différentes vitesses d'aspiration de la turbine d'aspiration 24. Ces différents modes de fonctionnement seront programmés sur la carte électronique 13. Ce clavier peut également servir à mettre en marche et à arrêter l'aspirateur à main 6 et la base mobile 5 lorsqu'ils sont accouplés entre eux, dans quel cas le bouton marche/arrêt 55 sur l'aspirateur permettra uniquement de mettre en marche et d'arrêter l'aspirateur à main 6 lors de son utilisation individuellement. Dans ce cas, la carte électronique 13 sur la base mobile 5 et la deuxième carte électronique 29 sur l'aspirateur à main 6 seront programmées en conséquence.

Il est également possible de prévoir une variante d'aspirateur robot 1 selon laquelle le transformateur de tension 53 serait supprimé de la première carte électronique 28 sur l'aspirateur à main 6, le transformateur 3 dans la station d'accueil 2 permettant dans ce cas d'alimenter électriquement la base mobile 5 et l'aspirateur à main 6 au moyen d'une tension commune, par exemple une tension de 21,9 Volts.

On peut également envisager d'autres variantes de moyens de verrouillage entre la base mobile 5 et l'aspirateur à main lorsqu'ils sont accouplés entre eux, que la mise en œuvre décrite précédemment entre le pêne 37 et la gâche 41. Selon un premier exemple, la poignée de manipulation 30 pourrait être montée à pivotement sur l'aspirateur à main 6 entre une position verticale telle qu'illustrée en figure 4 et une position horizontale non illustrée (perpendiculairement à la position illustrée en figure 4). Le pivotement de la poignée de manipulation 30 permettrait d'actionner le pêne 37 qui serait dans ce cas agencé sur la partie arrière 23b du corps 23, l'actionnement du pêne 37 se faisant par le biais d'un mécanisme de transmission (non illustré). Dans une première position de la poignée de manipulation 30, par exemple en position horizontale, le pêne 37 serait escamoté dans ladite partie arrière 23b et dans une seconde position de la poignée de manipulation 30, par exemple en position verticale, le pêne 37 serait saillant de ladite partie arrière 23b pour être engagé dans la gâche 41 sur l'embase 40 de la base mobile 5 lorsque l'aspirateur à main 6 est engagé sur celle-ci. Selon un second exemple, on pourrait reprendre le principe de pivotement de la poignée de manipulation 30 décrit ci-avant pour le premier exemple, en conservant le pêne 37 sur la poignée de manipulation 30 et la gâche 41 sur l'embase 40. Dans ce cas, le pivotement de la poignée de manipulation 30 en position horizontale permettrait d'extraire le pêne 37 de la gâche 41 et, inversement, son pivotement en position verticale permettrait de ramener le pêne 37 dans la gâche 41 pour le verrouillage de l'aspirateur à main 6 engagé sur la base mobile 5.

On pourra également envisager d'autres scénarios de commande des fonctions de navigation et d'aspiration, en programmant en conséquence la carte électronique 13 sur la base mobile 5 et les première et deuxième cartes électroniques 28, 29 sur l'aspirateur à main 6.

On pourrait envisager une variante d'aspirateur robot 1 prévoyant deux jeux de batteries distincts disposés respectivement dans la base mobile 5 et dans l'aspirateur à main 6, tout en restant dans le cadre de l'invention.

La description qui précède n'a aucun caractère limitatif, des variantes de réalisation et des caractéristiques additionnelles pouvant être envisagées dans le cadre de l'invention.

## Revendications

1. Aspirateur robot (1) comprenant une base mobile (5) et un aspirateur à main (6), des premiers moyens de réception étant agencés entre la base mobile (5) et l'aspirateur à main (6) pour permettre leur engagement l'un dans l'autre afin d'aspirer une surface (7) au moyen de l'aspirateur à main (6) durant les déplacements de la base mobile (5) sur cette surface (7), ledit aspirateur à main (6) pouvant être extrait de ladite base mobile (5) pour son utilisation individuelle, **caractérisé en ce que** l'aspirateur à main (6) comprend un corps (23) et un tube d'aspiration (26) muni à son extrémité d'un premier embout (27), les premiers moyens de réception comprenant un logement (31) en forme d'entonnoir qui communique avec une bouche d'aspiration (19) sous la base mobile (5) par le biais d'un second embout (32), les premier (27) et second (32) embouts étant configurés pour s'emboîter l'un dans l'autre lors de l'engagement du corps (23) et du tube d'aspiration (26) dans le logement (31), les formes du corps (23) et du tube d'aspiration (26) étant complémentaires à celles du logement (31).

2. Aspirateur robot (1) selon la revendication 1, dans lequel la bouche d'aspiration (19) comprend une forme allongée s'étendant dans le sens de la largeur de la base mobile (5), une brosse (20) étant agencée dans la bouche d'aspiration (19) et des moyens d'entrainement en rotation (21) de la brosse, logés dans la base mobile (5).

3. Aspirateur robot (1) selon l'une des revendications 1 ou 2, dans lequel l'aspirateur à main (6) comprend une poignée de manipulation (30) et le corps (23) comprend une forme allongée transversale à la poignée de manipulation (30), ladite poignée de manipulation (30) et le tube d'aspiration (26) étant disposés en opposition chacun d'un côté du corps (23), en partie centrale dudit corps (23).

4. Aspirateur robot (1) selon l'une des revendications 1 à 3, dans lequel le corps (23) comprend une grille d'évacuation d'air (57) orientée vers le haut du côté du tube d'aspiration (26), le logement (31) comprend un canal de guidage (58) de l'air dans lequel est disposée la grille d'évacuation d'air (57) lors de l'engagement du corps (23) dans le logement (31).

5. Aspirateur robot (1) selon l'une des revendications 1 à 4, lequel comprend des moyens de verrouillage de l'aspirateur à main (6) en position engagée sur la base mobile (5).

6. Aspirateur robot (1) selon l'une des revendications 1 à 5, dans lequel la base mobile (5) est inscrite dans un cylindre aplati, l'aspirateur à main (6) et les premiers moyens de réception étant configurés pour que ledit aspirateur à main (6) soit également inscrit dans ce cylindre aplati en position engagée dans la base mobile (5).

7. Aspirateur robot (1) selon l'une des revendications 1 à 6, lequel comprend des premiers moyens de connexion électrique (44a-44e, 46a-46e) agencés entre l'aspirateur à main (6) et la base mobile (5) et mis en place lors de l'engagement de l'aspirateur à main (6) sur la base mobile (5).

8. Aspirateur robot (1) selon la revendication 6, dans lequel l'aspirateur à main (6) comprend un jeu de batteries (22) rechargeables configuré pour permettre son alimentation électrique et celle de la base mobile (5) lors dudit engagement.

9. Aspirateur robot (1) selon la revendication 7, lequel comprend une station d'accueil (2) configurée pour être alimentée par une source électrique externe, des seconds moyens de réception étant agencés entre la base mobile (5) et la station d'accueil (2) pour permettre le positionnement de la base mobile (5) sur la station d'accueil (2), des seconds moyens de connexion électrique (4a, 4b, 17a, 17b) étant agencés entre la station d'accueil (2) et la base mobile (5) et mis en place lors dudit positionnement, des moyens de raccordement électrique (47a, 47b) étant agencés entre les premiers moyens de connexion électrique (44a-44e, 46a-46e) et les seconds moyens de connexion électrique (4a, 4b, 17a, 17b) pour permettre la recharge du jeu de batteries (22) lorsque l'aspirateur à main (6) est engagé sur la base mobile (5) et que la base mobile est positionnée sur la station d'accueil (2).

10. Aspirateur robot (1) selon l'une des revendications 8 ou 9, lequel comprend une première carte électronique (28) logée dans l'aspirateur à main (6) et configurée pour gérer l'alimentation électrique de l'aspirateur à main (6) et celle de la base mobile (5) au moyen du jeu de batteries (22) et la recharge électrique dudit jeu de batteries (22).

11. Aspirateur robot (1) selon l'une des revendications 1 à 10, dans lequel l'aspirateur à main (6) comprend un bouton marche/arrêt (55) configuré pour commander son alimentation électrique et celle de la base mobile (5) depuis le jeu de batteries (22).

12. Aspirateur robot (1) selon la revendication 11, dans lequel la base mobile (5) comprend une deuxième carte électronique (13) configurée pour gérer la navigation de ladite base mobile (5), ladite deuxième carte électronique étant fonctionnelle lorsque le bouton marche/arrêt (55) est en position marche et que l'aspirateur à main (6) est engagé sur la base mobile.

13. Aspirateur robot (1) selon la revendications 12, dans lequel la base mobile (5) comprend un clavier configuré pour gérer des programmes de navigation de la base mobile enregistrés sur la deuxième carte électronique (13), ledit clavier étant fonctionnel lorsque le bouton marche/arrêt (55) est en position marche et que l'aspirateur à main (6) est engagé sur la base mobile.

14. Aspirateur robot (1) selon l'une des revendications 10 à 13, dans lequel l'aspirateur à main (6) comprend une troisième carte électronique (29) configurée pour gérer les différents modes d'aspiration, ladite troisième carte électronique étant fonctionnelle dès que le bouton marche/arrêt (55) est en position marche, indépendamment de l'engagement dudit aspirateur à main sur la base mobile (5).

15. Aspirateur robot (1) selon la revendication 14 rattachée à l'une des revendications 12 ou 13, dans laquelle la deuxième carte électronique (13) est connectée à la troisième carte électronique (29) par le biais des premiers moyens de connexion électrique (44a-44e, 46a-46e) lors de l'engagement de l'aspirateur à main (6) sur la base mobile (5).

## Patentansprüche

1. Roboterstaubsauger (1), der eine mobile Basis (5) und einen Handstaubsauger (6) umfasst, wobei erste Aufnahmemittel zwischen der mobilen Basis (5) und dem Handstaubsauger (6) eingerichtet sind, um ihr Eingreifen ineinander zu erlauben, um eine Oberfläche (7) mittels des Handstaubsaugers (6) während der Bewegungen der beweglichen Basis (5) auf dieser Oberfläche (7) anzusaugen, wobei der Handstaubsauger (6) aus der beweglichen Basis (5) für seine individuelle Verwendung extrahiert werden kann, **dadurch gekennzeichnet, dass** der Handstaubsauger (6) einen Körper (23) und ein Saugrohr (26), das an seinem Ende mit einem ersten Ansatz (27) versehen ist, umfasst, wobei die ersten Aufnahmemittel eine Aufnahme (31) in Trichterform umfassen, die mit einer Saugöffnung (19) unter der beweglichen Basis (5) über einen zweiten Ansatz (32) in Verbindung steht, wobei der erste (27) und der zweite (32) Ansatz konfiguriert sind, um ineinander bei dem Eingreifen des Körpers (23) und des Saugrohrs (26) in der Aufnahme (31) einzurasten, wobei die Formen des Körpers (23) und des Saugrohrs (26) zu denjenigen der Aufnahme (31) komplementär sind.

2. Roboterstaubsauger (1) nach Anspruch 1, wobei die Ansaugöffnung (19) eine längliche Form umfasst, die sich in die Richtung der Breite der beweglichen Basis (5) erstreckt, wobei eine Bürste (20) in der Ansaugöffnung (19) eingerichtet ist, und Antriebsmittel in Drehung (21) der Bürste in der beweglichen Basis (5) untergebracht sind.

3. Roboterstaubsauger (1) nach einem der Ansprüche 1 oder 2, wobei der Handstaubsauger (6) einen Handhabungsgriff (30) umfasst, und der Körper (23) eine längliche Form quer zu dem Handhabungsgriff (30) umfasst, wobei der Handhabungsgriff (30) und das Saugrohr (26) einander entgegengesetzt jeweils auf einer Seite des Körpers (23) in dem zentralen Teil des Körpers (23) angeordnet sind.

4. Roboterstaubsauger (1) nach einem der Ansprüche 1 bis 3, wobei der Körper (23) ein Luftauslassgitter (57) umfasst, das auf der Seite des Saugrohrs (26) nach oben ausgerichtet ist, wobei die Aufnahme (31) einen Führungskanal (58) der Luft umfasst, in dem das Luftauslassgitter (57) bei dem Eingreifen des Körpers (23) in die Aufnahme (31) angeordnet ist.

5. Roboterstaubsauger (1) nach einem der Ansprüche 1 bis 4, der Mittel zum Verriegeln des Handstaubsaugers (6) in der auf der beweglichen Basis (5) eingreifenden Position umfasst.

6. Roboterstaubsauger (1) nach einem der Ansprüche 1 bis 5, wobei die bewegliche Basis (5) in einen abgeflachten Zylinder fällt, wobei der Handstaubsauger (6) und die ersten Aufnahmemittel konfiguriert sind, damit der Handstaubsauger (6) in auf der beweglichen Basis (5) eingreifenden Position auch in diesen abgeflachten Zylinder fällt.

7. Roboterstaubsauger (1) nach einem der Ansprüche 1 bis 6, der erste Mittel zum elektrischen Verbinden (44a bis 44e, 46a bis 46e) umfasst, die in dem Handstaubsauger (6) und in der beweglichen Basis (5) eingerichtet sind und bei dem Eingreifen des Handstaubsaugers (6) auf der beweglichen Basis (5) an Ort und Stelle gebracht werden.

8. Roboterstaubsauger (1) nach Anspruch 6, wobei der Handstaubsauger (6) einen Satz aufladbarer Batterien (22) umfasst, der konfiguriert ist, um seine Stromversorgung und diejenige der beweglichen Basis (5) bei dem Eingreifen zu erlauben.

9. Roboterstaubsauger (1) nach Anspruch 7, der eine Empfangsstation (2) umfasst, die konfiguriert ist, um von einer externen Stromquelle versorgt zu sein, wobei zweite Aufnahmemittel zwischen der beweglichen Basis (5) und der Empfangsstation (2) eingerichtet sind, um das Positionieren der beweglichen Basis (5) auf der Empfangsstation (2) zu erlauben, wobei zweite Mittel zum elektrischen Verbinden (4a, 4b, 17a, 17b) zwischen der Empfangsstation (2) und der beweglichen Station (5) eingerichtet sind und bei dem Positionieren an Ort und Stelle gebracht werden, wobei Mittel zum elektrischen Verbinden (47a, 47b) zwischen den ersten Mitteln zum elektrischen Verbinden (44a bis 44e, 46a bis 46e) und den zweiten Mitteln zum elektrischen Verbinden (4a, 4b, 17a, 17b) eingerichtet sind, um das Aufladen des Satzes von Batterien (22) zu erlauben, wenn der Handstaubsauger (6) auf der beweglichen Basis (5) eingreift und die bewegliche Basis auf der Empfangsstation (2) positioniert ist.

10. Roboterstaubsauger (1) nach einem der Ansprüche 8 oder 9, der eine erste elektronische Karte (28) umfasst, die in dem Handstaubsauger (6) untergebracht und konfiguriert ist, um die Stromversorgung des Handstaubsaugers (6) und diejenige der beweglichen Basis (5) mittels des Satzes von Batterien (22) und der elektrischen Aufladung des Satzes von Batterien (22) zu verwalten.

11. Roboterstaubsauger (1) nach einem der Ansprüche 1 bis 10, wobei der Handstaubsauger (6) einen Ein-/Ausschaltknopf (55) umfasst, der konfiguriert ist, um seine Stromversorgung und diejenige der beweglichen Basis (5) ausgehend von dem Satz von Batterien (22) zu steuern.

12. Roboterstaubsauger (1) nach Anspruch 11, wobei die bewegliche Basis (5) eine zweite elektronische Karte (13) umfasst, die konfiguriert ist, um die Navigation der beweglichen Basis (5) zu verwalten, wobei die zweite elektronische Karte funktional ist, wenn der Ein-Ausschaltknopf (55) in Ein-Position ist, und der Handstaubsauger (6) auf der beweglichen Basis eingreift.

13. Roboterstaubsauger (1) nach Anspruch 12, wobei die bewegliche Basis (5) eine Tastatur umfasst, die konfiguriert ist, um Navigationsprogramme der beweglichen Basis, die auf der zweiten elektronischen Karte (13) aufgezeichnet sind, zu verwalten, wobei die Tastatur funktional ist, wenn der Ein-/Ausschaltknopf (55) in Ein-Position ist und der Handstaubsauger (6) auf der beweglichen Basis eingreift.

14. Roboterstaubsauger (1) nach einem der Ansprüche 10 bis 13, wobei der Handstaubsauger (6) eine dritte elektronische Karte (29) umfasst, die konfiguriert ist, um die unterschiedlichen Ansaugmodi zu verwalten, wobei die dritte elektronische Karte unabhängig von dem Eingreifen des Handstaubsaugers auf der beweglichen Basis (5) funktional ist, sobald der Ein-/Ausschaltknopf (55) auf Ein-Position ist.

15. Roboterstaubsauger (1) nach Anspruch 14, verbunden mit einem der Ansprüche 12 oder 13, wobei die zweite elektronische Karte (13) mit der dritten elektronischen Karte (29) über erste Mittel zum elektrischen Verbinden (44a bis 44e, 46a bis 46e) bei dem Eingreifen des Handstaubsaugers (6) auf der beweglichen Basis (5) verbunden ist.

## Claims

1. Robot vacuum cleaner (1) comprising a mobile base (5) and a hand vacuum cleaner (6), with first reception means being arranged between the mobile base (5) and the hand vacuum cleaner (6) to enable their engagement into one another in order to vacuum clean a surface (7) by means of the hand vacuum cleaner (6) during displacements of the mobile base (5) on said surface (7), said hand vacuum cleaner (6) being removable from said mobile base (5) for the individual use thereof, **characterised in that** the hand vacuum cleaner (6) comprises a body (23) and a suction tube (26) provided at its end with a first nozzle (27), the first reception means comprising a housing (31) shaped like a funnel communicating with a suction inlet (19) under the mobile base (5) by means of a second nozzle (32), the first (27) and second (32) nozzles being configured to fit into one another when the body (23) and the suction tube (26) are engaged in the housing (31), the shapes of the body (23) and of the suction tube (26) fitting with those of the housing (31).

2. Robot vacuum cleaner (1) according to claim 1, wherein the suction inlet (19) comprises an elongated shape extending in the direction of the width of the mobile base (5), a brush (20) being arranged inside the suction inlet (19) and means (21) to rotationally drive the brush, housed in the mobile base (5).

3. Robot vacuum cleaner (1) according to one of claims 1 or 2, wherein the hand vacuum cleaner (6) comprises an operating handle (30) and the body (23) comprises an elongated shape transversal to the operating handle (30), said operating handle (30) and the suction tube (26) being arranged opposite one another on either side of the body (23), in the central part of said body (23).

4. Robot vacuum cleaner (1) according to one of claims 1 to 3, wherein the body (23) comprises a discharge air grille (57) oriented upwards on the side of the suction tube (26), the housing (31) comprises a channel (58) to guide the air wherein is arranged the discharge air grille (57) when the body (23) is engaged in the housing (31).

5. Robot vacuum cleaner (1) according to one of claims 1 to 4, comprising locking means of the hand vacuum cleaner (6) in a position whereby it is engaged on the mobile base (5).

6. Robot vacuum cleaner (1) according to one of claims 1 to 5, wherein the mobile base (5) is inscribed in a flattened cylinder, the hand vacuum cleaner (6) and the first reception means being configured so that said hand vacuum cleaner (6) is also inscribed in said flattened cylinder in a position whereby it is engaged in the mobile base (5).

7. Robot vacuum cleaner (1) according to one of claims 1 to 6, comprising first electric connection means (44a-44e, 46a-46e) arranged between the hand vacuum cleaner (6) and the mobile base (5) and in place when the hand vacuum cleaner (6) is engaged on the mobile base (5).

8. Robot vacuum cleaner (1) according to claim 6, wherein the hand vacuum cleaner (6) comprises a set of rechargeable batteries (22) configured to provide electric power to the hand vacuum cleaner and to the mobile base (5) when they are engaged in one another.

9. Robot vacuum cleaner (1) according to claim 7, comprising a docking station (2) configured to be powered by an external electrical source, second reception means being arranged between the mobile base (5) and the docking station (2) to enable the positioning of the mobile base (5) on the docking station (2), second electric connection means (4a, 4b, 17a, 17b) being arranged between the docking station (2) and the mobile base (5) and put into place during said positioning, electric coupling means (47a, 47b) being arranged between the first electric connection means (44a-44e, 46a-46e) and the second electric connection means (4a, 4b, 17a, 17b) to enable the charging of the set of batteries (22) when the hand vacuum cleaner (6) is engaged on the mobile base (5) and the mobile base is positioned on the docking station (2).

10. Robot vacuum cleaner (1) according to one of claims 8 or 9, comprising a first printed circuit board (28) housed inside the hand vacuum cleaner (6) and configured to manage the power supply of the hand vacuum cleaner (6) and of the mobile base (5) by means of the set of batteries (22) and of the electric charging of said set of batteries (22).

11. Robot vacuum cleaner (1) according to one of claims 1 to 10, wherein the hand vacuum cleaner (6) comprises a start/stop button (55) configured to command the power supply of the hand vacuum cleaner and of the mobile base (5) from the set of batteries (22).

12. Robot vacuum cleaner (1) according to claim 11, wherein the mobile base (5) comprises a second printed circuit board (13) configured to manage the navigation of said mobile base (5), said second printed circuit board being operational when the start/stop button (55) is in the start position and the hand vacuum cleaner (6) is engaged on the mobile base.

13. Robot vacuum cleaner (1) according to claim 12, wherein the mobile base (5) comprises a keypad configured to manage the navigation programs of the mobile base recorded on the second printed circuit board (13), said keypad being operational when the start/stop button (55) is in the start position and the hand vacuum cleaner (6) is engaged on the mobile base.

14. Robot vacuum cleaner (1) according to one of claims 10 to 13, wherein the hand vacuum cleaner (6) comprises a third printed circuit board (29) configured to manage different suction modes, said third printed circuit board being operational when the start/stop button (55) is in the start position, regardless of whether said hand vacuum cleaner is engaged on the mobile base (5).

15. Robot vacuum cleaner (1) according to claim 14 associated with one of claims 12 or 13, wherein the second printed circuit board (13) is connected to the third electronic board (29) by means of the first electric connection means (44a-44e, 46a-46e) when the hand vacuum cleaner (6) is engaged on the mobile base (5).
